# EUROPEAN PATENT SPECIFICATION

(11) **EP 3 319 191 B1**
(45) Date of publication and mention of the grant of the patent: **09.09.2020**
(21) Application number: 17198252.3
(22) Date of filing: 25.10.2017
(51) Int. Cl.: H02G 3/04, F16G 13/16

(54) **ARTICULATED GUIDE FOR CABLES**
GELENKIGE FÜHRUNG FÜR KABEL
GUIDE ARTICULÉ POUR CÂBLES

(30) Priority: 07.11.2016 ES 201631322 U
(43) Date of publication of application: 09.05.2018
(73) Proprietor: Unex Aparellaje Electrico S.L., 08903 L'Hospitalet de Llobregat (Barcelona) (ES)
(72) Inventor: Salcedo Suñol, Eloi, 08620 Sant Vicenç dels Horts (ES)
(74) Representative: Curell Suñol S.L.P.

(56) References cited:
- EP-A1- 0 875 695
- EP-A1- 1 160 948
- EP-A1- 1 372 233
- US-A- 5 824 957
- US-A1- 2009 025 361

## Description

### Field of the Invention

The invention is comprised in the field of devices for laying conductor cables, such as electric cables or optical fiber cables, for example, particularly in offices or technical facilities for connecting different pieces of equipment to one another or to a power or data supply source.

More specifically, the invention relates to an articulated guide for cables formed by a plurality of clamps that are successively attached to one another in an articulated manner, each of these clamps comprising at least one arm demarcating a duct segment for cables, such that the succession of the duct segments of the clamps forms a duct for cables along the articulated guide, and in which the arm of each clamp has a free end and is elastically flexible, such that the bending of the arm laterally opens the duct segment for inserting a cable laterally therein.

### State of the Art

Document ES2330322T3 describes an articulated guide for cables of this type which has been developed and marketed by the applicant, in which the clamps are attached to one another by means of an articulation with a single transverse axis of rotation, perpendicular to the axial direction of the articulated guide for cables, and in which two contiguous clamps are coupled to one another by means of a lug formed at one end of the clamp which is laterally inserted into an oblong through hole formed at the corresponding opposite end of the contiguous clamp. Although this articulated guide for cables satisfactorily fulfills its purpose, it can be improved in terms of the ease of attaching two clamps to one another and of the freedom to devise bent paths with the articulated guide.

US5824957A discloses an articulated guide for cables according to the preamble of claim 1.

EP1160948A1 discloses an articulated guide for cables with radial arms which extend radially from a central body and form channels for fitting cables. The rotation of the clamps is limited by abutment of the edges of the arms.

### Description of the Invention

The purpose of the invention is to provide an articulated guide for cables of the type indicated above, which allows more easily attaching the clamps to one another and provides a greater freedom to devise bent paths, all this without compromising robustness of the articulated guide and without significantly increasing its cost.

This is achieved by means of an articulated guide for cables according to claim 1.

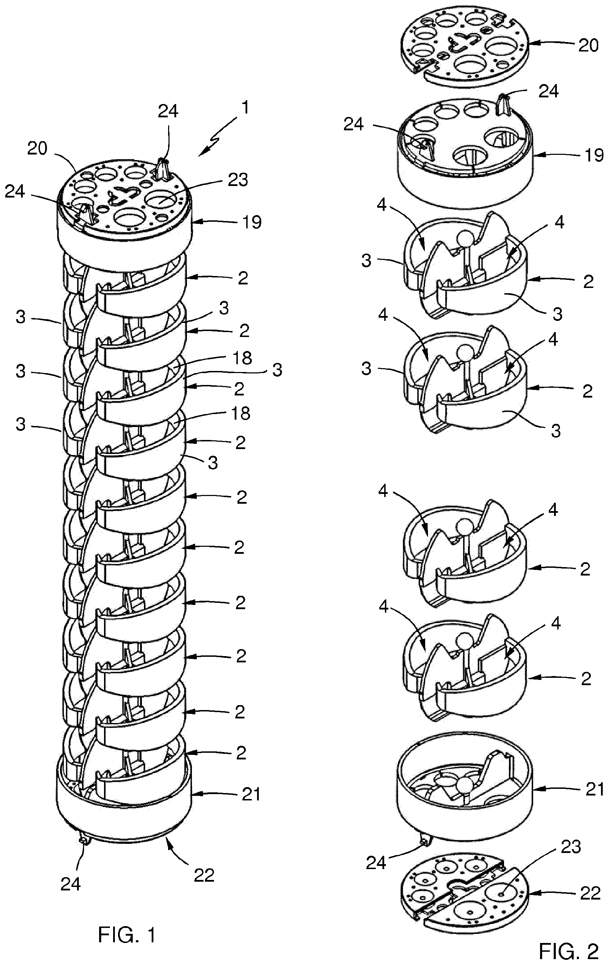

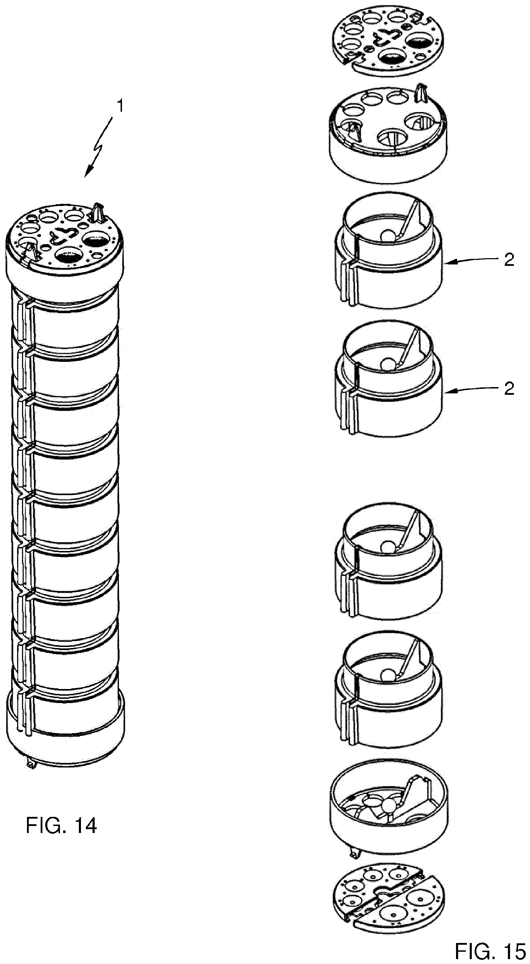

In the present document, the axial direction of the articulated guide is the longitudinal direction of the guide when the clamps are arranged forming a guide in a straight line, such as in Figures 1 and 14.

As a result of this configuration according to the invention, two clamps are coupled to one another to form the articulated attachment with greater ease, i.e., by simply pushing one clamp against the other in the axial direction of the articulated guide. Furthermore, as a result of the articulated attachment being made by means of a spherical ball-and-socket joint, and of the male and female portions of this spherical ball-and-socket being arranged at the ends of the clamp in the axial direction, the limitation of the preceding design, in which each clamp can only rotate about a transverse axis, is overcome.

In some preferred embodiments, the opening is formed by two lips facing one another and extending from the female portion in the axial direction and having a cantilever free end, said lips progressively separating from one another in the direction away from the female portion and forming between them at their free end a seat to receive the male portion of the contiguous clamp before snap-fitting. This particular configuration of the opening makes it even easier to couple two clamps to one another since the coupling operation is performed by first placing the male portion of a clamp in the seat formed by the lips at the end of the other clamp, thereby obtaining a stable relative position, and then pushing one clamp against the other, whereby the male portion readily separates the lips extending from the female portion as it is inserted between said lips into said female portion.

Each clamp comprises a central partition and two of said arms extending on opposite sides of said central partition, said two arms demarcating with said central partition two duct segments separated by said central partition, the male portion and the female portion being formed in said central partition, at opposite ends thereof along the axial direction, wherein each clamp can rotate in a relative manner with respect to the contiguous clamp to which it is attached about the ball-and-socket joint according to at least a first axis of rotation perpendicular to the central partition and to the axial direction and a second axis of rotation perpendicular to the first axis of rotation and to the axial direction. The succession of the two duct segments thereby forms two ducts for cables along the articulated guide, separated by the succession of central partitions. The possibility of the clamps rotating according to the two particular axes that have been mentioned allows running guided cables in these two separated ducts along bent paths that change planes in a particularly reliable manner since the succession of the central partitions of the clamps forms an articulated central partition that progressively follows the desired path that changes planes.

The central partition of each clamp comprises first abutting means for limiting the rotation of the clamp according to the first axis of rotation perpendicular to the central partition, said first abutting means consisting of two lobes formed in the central partition on either side of the male portion and extending in the axial direction on the same plane as the central partition, and two abutting edges formed in the central partition on either side of the female portion and having a shape complementary to the shape of the lobes, such that when the clamp rotates a specific angle according to the first axis of rotation, one of the lobes of the central partition of the clamp abuts with one of the abutting edges of the central partition of the contiguous clamp to which it is attached. This configuration allows reliably limiting the angle of rotation of the clamps. An excessive angle of rotation which may cause an undesired interference between the arms of two contiguous clamps or an excessive curvature of the cables led through the articulated guide is thereby prevented.

In some envisaged embodiments, the central partition comprises two recessed areas formed in said central partition on either side of the female portion and on opposite sides of said central partition with respect to the central plane thereof, such that the lobe of the contiguous clamp slides on the corresponding recessed area when said clamp rotates according to the first axis of rotation, the abutting edges consisting of the step formed by each recessed area in the central partition, and in said recessed area the wall of the central partition has a curvature that moves the free end of this recessed area away from the central plane of the central partition, such that this curvature allows rotation of the clamp according to the second axis of rotation. This configuration offers the advantage that the central partition along the articulated guide, formed by the succession of the central partitions of the clamps, can be devoid of openings caused by rotation of the clamps, or in any case allows considerably reducing these openings.

In other envisaged embodiments, the central partition comprises two notches on either side of the female portion, such that the lobe of the contiguous clamp slides into said corresponding notch when said clamp rotates according to the first axis of rotation, the abutting edges consisting of the edge of said notch. This configuration does not have the aforementioned advantage, but it is simpler construction-wise and provides a particularly robust abutment of the angle of rotation.

In some embodiments, in each pair of contiguous clamps attached to one another by the ball-and-socket joint, the corresponding arms of the clamps are separated from one another by a gap, such that the duct for cables formed by the succession of the duct segments of the clamps is a discontinuous duct that is open at said gaps between the arms. In these embodiments, the cables guided in the duct of the articulated guide are not protected from the surrounding environment. However, they have the advantage of narrower arms, and it is therefore easier to bend them for inserting the cables laterally into the duct. Furthermore, the articulated guide is more lightweight.

In other embodiments, in each pair of contiguous clamps attached to one another by the ball-and-socket joint, the arm of a clamp is fitted into the arm of the contiguous clamp to which it is attached, i.e., an end of one arm is inserted into an end of the other arm, such that the duct for cables formed by the succession of the duct segments of the clamps is a continuous duct that is closed by said arms, and in the area in which the two arms are fitted into one another, the external dimension of the inner arm is smaller than the internal dimension of the outer arm to allow relative rotation of one clamp with respect to another about the ball-and-socket joint. This configuration has the advantage that the cables guided in the duct of the articulated guide are protected from the surrounding environment, without this entailing an excessive limitation of the angle of rotation of the clamps.

In the preferred embodiments, each of the clamps is a single part molded from polymeric material.

The invention also comprises other detailed features illustrated in the following detailed description of an embodiment of the invention and in the attached drawings.

### Brief Description of the Drawings

Other advantages and features of the invention can be seen from the following description in which preferred embodiments of the invention are described in reference to the attached drawings without limiting the scope of the main claim.
Figures 1 to 13 show a first embodiment of the articulated guide for cables according to the invention, in which the ducts for cables formed by the clamps are open ducts.
Figure 1 is a perspective view of the articulated guide in a straight position.
Figure 2 is an exploded perspective view of the articulated guide, in which only some of the clamps forming the articulated guide are shown.
Figures 3 to 8 are a top perspective view, a bottom perspective view, a side view, a front view, a top view and a bottom view, respectively, of one of the clamps forming the articulated guide.
Figure 9 is a front view of two contiguous clamps attached to one another forming the ball-and-socket joint, in a straight position.
Figures 10 and 11 are front views of the two clamps in a tilted position, in which one clamp is rotated with respect to the other according to the second axis of rotation Z, in one direction and in the opposite direction, respectively.
Figures 12 and 13 are side views of the two clamps in a tilted position, in which one clamp is rotated with respect to the other according to the first axis of rotation Y, in one direction and in the opposite direction, respectively.
Figures 14 to 24 show a second embodiment of the articulated guide for cables according to the invention, in which the ducts for cables formed by the clamps are closed ducts.
Figure 14 is a perspective view of the articulated guide in a straight position.
Figure 15 is an exploded perspective view of the articulated guide, in which only some of the clamps forming the articulated guide are shown.

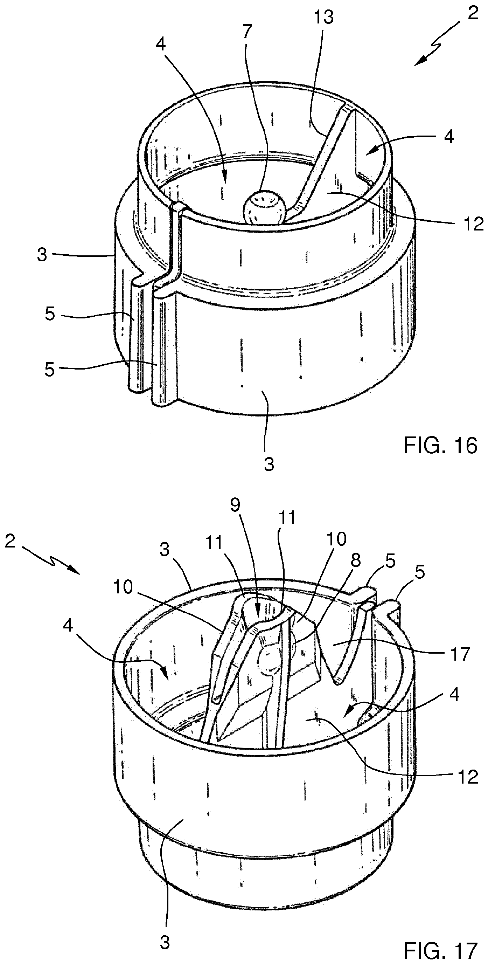

Figures 16 to 20 are a top perspective view, a bottom perspective view, a side view, a top view and a bottom view, respectively, of one of the clamps forming the articulated guide.

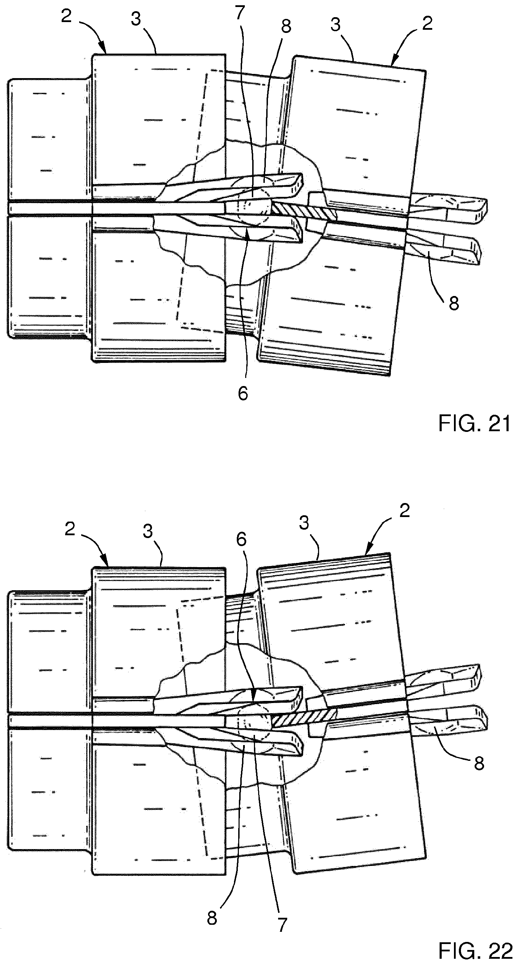

Figures 21 and 22 are front views of two contiguous clamps attached to one another forming the ball-and-socket joint, in a tilted position in which one clamp is rotated with respect to the other according to the second axis of rotation Z, in one direction and in the opposite direction, respectively.

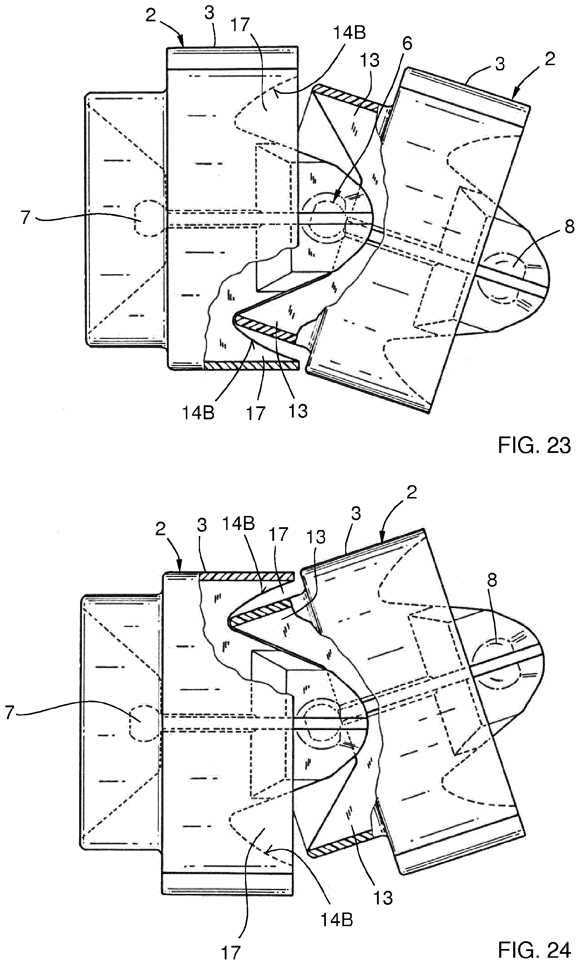

Figures 23 and 24 are side views of the two clamps in a tilted position in which one clamp is rotated with respect to the other according to the first axis of rotation Y, in one direction and in the opposite direction, respectively.

### Detailed Description of Embodiments of the Invention

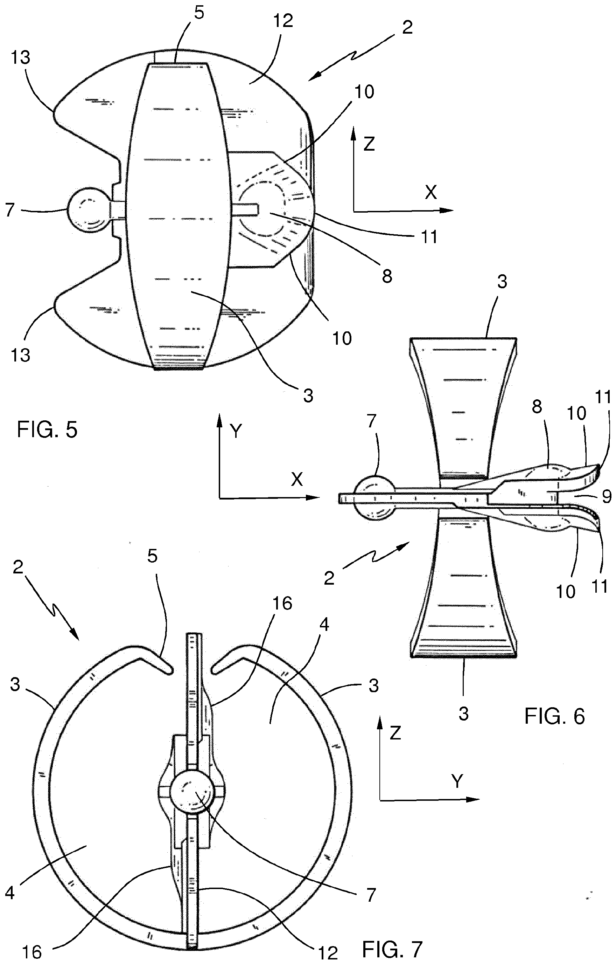

Figures 1 to 13 show a first embodiment in which the clamps forming the articulated guide form two ducts for cables with side openings.

As can be seen Figures 1 and 2, the articulated guide 1 for cables is formed by a plurality of clamps 2 that are successively attached to one another in an articulated manner to form a duct for cables. The duct thus formed can be bent according to at least two axes of rotation perpendicular to one another as a result of the relative rotation of the clamps 2 with respect to one another, as will be seen below. The articulated guide 1 is constructed by attaching as many clamps 2 as necessary to one another to obtain a desired length of said articulated guide 1. Each clamp 2 comprises two arms 3, each of them demarcating a duct segment 4 for cables, such that the succession of these duct segments 4 of the clamps 2 attached to one another forms two ducts for cables along the articulated guide 1.

In Figure 1, the articulated guide 1 has been depicted in a straight position, i.e., in a position in which the duct segments 4 of the clamps 2 form a rectilinear duct. The axial direction X, to which reference will be made below, is the longitudinal direction of the articulated guide 1 in this straight position shown in Figure 1.

Preferably, end units which are attached on one side to the contiguous clamp 2 in an articulated manner and on the other side to a corresponding support (not depicted) are arranged at the ends of the articulated guide 1. These end units are preferably provided with several holes 23 for the passage of cables in the axial direction X and with engagement means, such as for example pins 24, for fixing these end units of the articulated guide 1 to the corresponding support by pressure. In the depicted embodiments, these end units are each formed by an end part 19, 21 which is attached in an articulated manner to the contiguous clamp 2 and a cover part 20, 22 which is fixed to the end part 19, 21 by pressure.

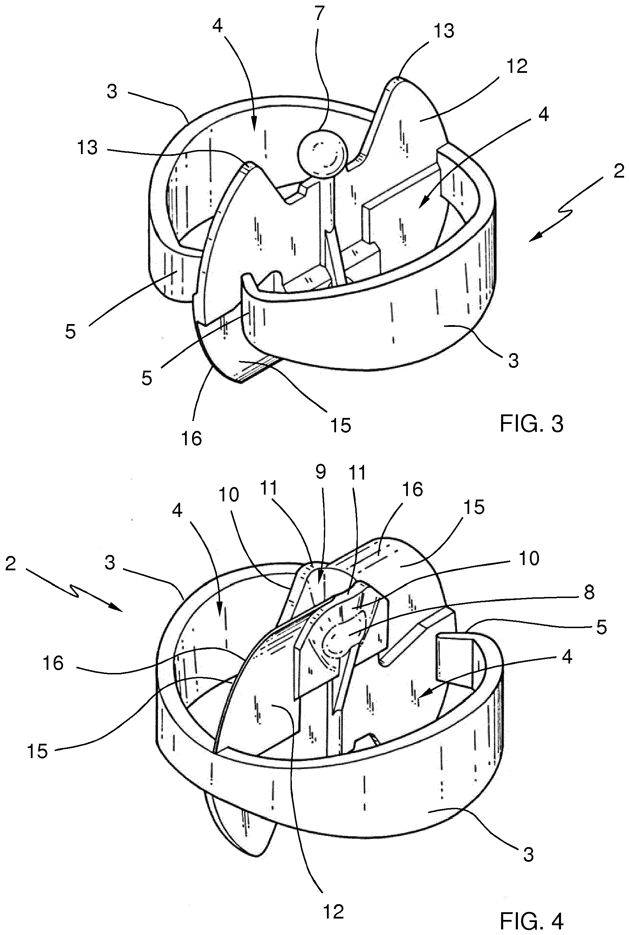

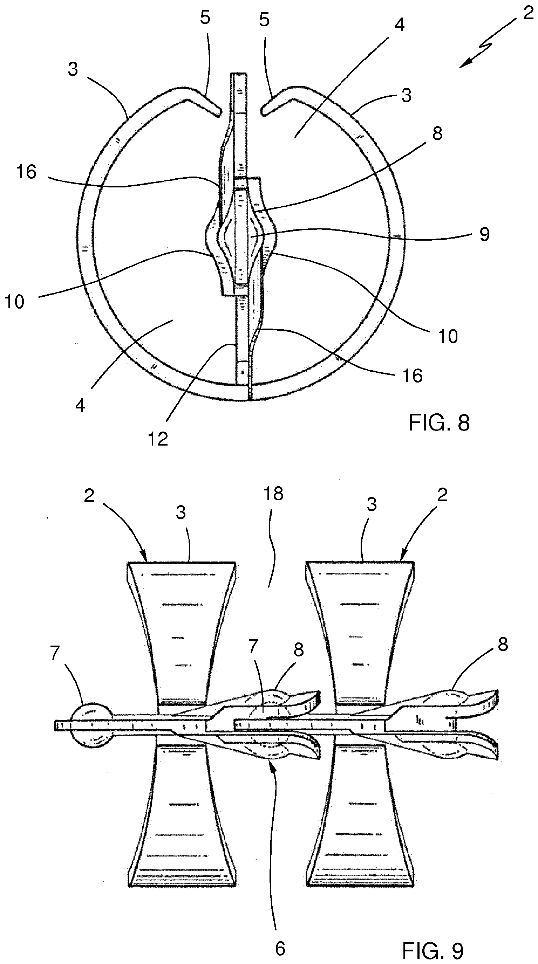

The clamps 2 are identical to one another. Their shape is depicted in detail in Figures 3 to 8. Figures 9 to 13 show the attachment between two contiguous clamps 2, as well as the way in which these clamps 2 can rotate with respect to one another to bend the duct formed by the articulated guide 1.

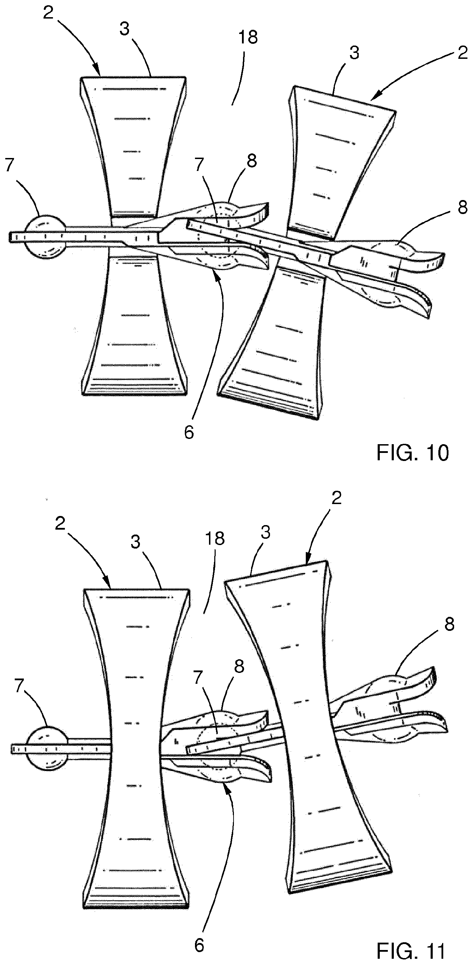

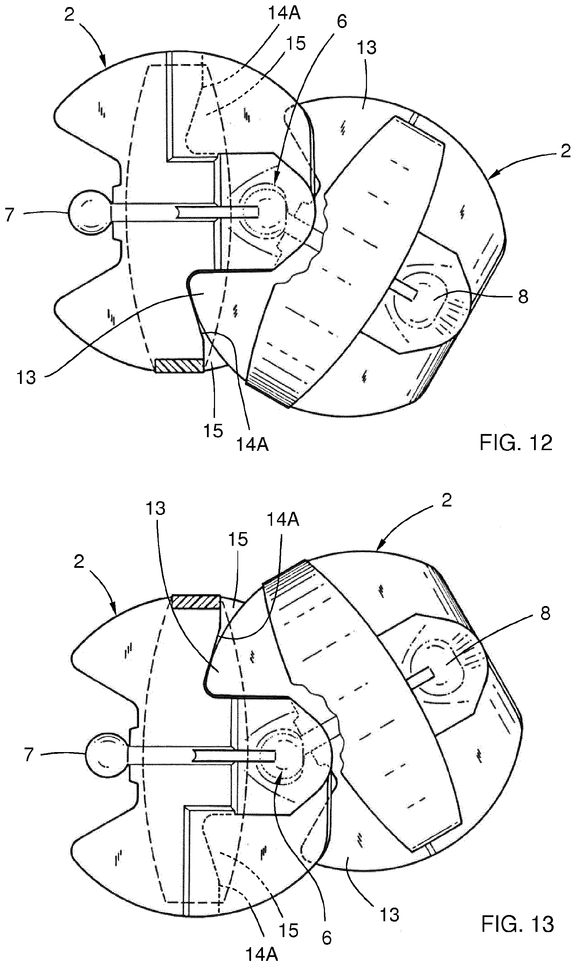

Each clamp 2 comprises a central partition 12 and two arms 3 extending respectively on two opposite sides thereof, such that each arm 3 demarcates a duct segment 4 with said central partition 12. The two arms 3 of each clamp 2 thereby form two duct segments 4 separated from one another by the central partition 12. Each arm 3 has a free end 5 and is elastically flexible, such that by bending the arm 3 the duct segment 4 can be opened laterally for inserting a cable laterally therein. In the depicted embodiment, the central partition 12 has a general disc shape and the two arms 3 are symmetrical with respect to the main plane thereof and have a general rib shape. More specifically, the arms 3 have a semicircular path, projecting from a lateral end of the central partition 12 with their free end 5 ending a short distance from the latter. A spherical ball male portion 7 and a spherical socket female portion 8 are formed, respectively, at opposite ends of the central partition 12 along the axial direction X, which are also opposite ends of the clamp 2, where these portions are configured such that the male portion 7 of a clamp 2 is inserted into the female portion 8 of the contiguous clamp 2 to form a spherical ball-and-socket joint 6 constituting the articulated attachment of two contiguous clamps 2. Each clamp 2 can rotate about the ball-and-socket joint 6 in a relative manner with respect to the contiguous clamp 2 to which it is attached. This relative rotation of each clamp 2 is possible at least according to a first axis of rotation Y perpendicular to the central partition 12 and to the axial direction X, in two opposite directions of rotation as shown in Figures 12 and 13, and a second axis of rotation Z perpendicular to said first axis of rotation Y and to said axial direction X, also in two opposite directions of rotation as shown in Figures 10 and 11.

As can be seen Figures 9 to 11, in each pair of contiguous clamps 2 attached to one another by the ball-and-socket joint 6, the corresponding arms 3 of the clamps 2 are separated from one another by a gap 18. The two ducts for cables thus formed by the succession of the duct segments 4 of the clamps 2 are therefore discontinuous ducts that are open laterally at the gaps 18 between the arms 3.

Each clamp 2 comprises an opening 9 which is oriented in the axial direction X and opens into the female portion 8. This opening 9 is formed by two lips 10 facing one another and extending from the female portion 8 in the axial direction X and having a cantilever free end 11. The lips 10 progressively separate from one another in the direction away from the female portion 8, and form between them at their free end 11 a seat intended for receiving the male portion 7 of the contiguous clamp 2 before said snap-fitting. When the two contiguous clamps 2 are pushed towards one another in the axial direction X, the male portion 7 is pushed towards the female portion 8 and forcefully makes its way between the lips 10, thereby causing the elastic bending of these lips which causes them to move away from one another and elastically deforms the opening 9 until the male portion 7 has passed through opening. Once the male portion 7 has gone through the opening 9 by pressure and is housed in the female portion 8, as shown Figures 9 to 13, the male portion 7 is snap-fitted into the female portion 8, thereby forming the ball-and-socket joint 6. The lips 10 must again be separated to pry the two portions 7 and 8 apart and this operation usually requires using a tool, such as a flat screwdriver, for example.

As can be seen Figures 12 and 13, the relative rotation of the clamps 2 about the first axis of rotation Y is limited by first abutting means consisting, on one hand, of two symmetrical lobes 13 formed in the central partition 12 on either side of the male portion 7 and extending in the axial direction X substantially on the same plane as said central partition 12, and on the other hand, by two abutting edges 14A formed in said central partition 12 on either side of the female portion 8 and having a shape complementary to the shape of the lobes 13. When the clamp 2 rotates a specific angle according to the first axis of rotation Y, one of the lobes 13 of the central partition 12 thereof abuts with one of the abutting edges 14A of the central partition 12 of the contiguous clamp 2. The two abutment positions in the two opposite directions of rotation are shown, respectively, in Figures 12 and 13. In the embodiments shown in these drawings, the abutting edges 14A consist of the step formed by two symmetrical recessed areas 15 formed in the central partition 12 on either side of the female portion 8 and on opposite sides of said central partition 12 with respect to the central plane thereof. When the clamp 2 rotates according to the first axis of rotation Y, the lobe 13 of the central partition 12 thereof slides on the corresponding recessed area 15 of the central partition 12 of the contiguous clamp, until the lobe 13 abuts against the edge 14A. Furthermore, in each recessed area 15 the wall of the central partition 12 has a curvature 16 that moves the free end of said recessed area 15 away from the central plane of said central partition 12. As a result of this curvature 16, each clamp 2 can rotate in a relative and limited manner with respect to the contiguous clamp 2 according to the second axis of rotation Z, as shown in Figures 10 and 11.

Each clamp 2 is a single part molded from polymeric material. An electrically insulating material with a surface resistivity greater than 100 MΩ, such as PVC (polyvinylchloride) or polycarbonate, for example, is preferably selected as the polymeric material.

Figures 14 to 24 show a second embodiment in which the clamps forming the articulated guide form two closed ducts for cables. This embodiment only differs from the first embodiment in the features described below. The same reference numbers as in the first embodiment as used in the drawings to designate portions which, even if they have a different shape, are analogous.

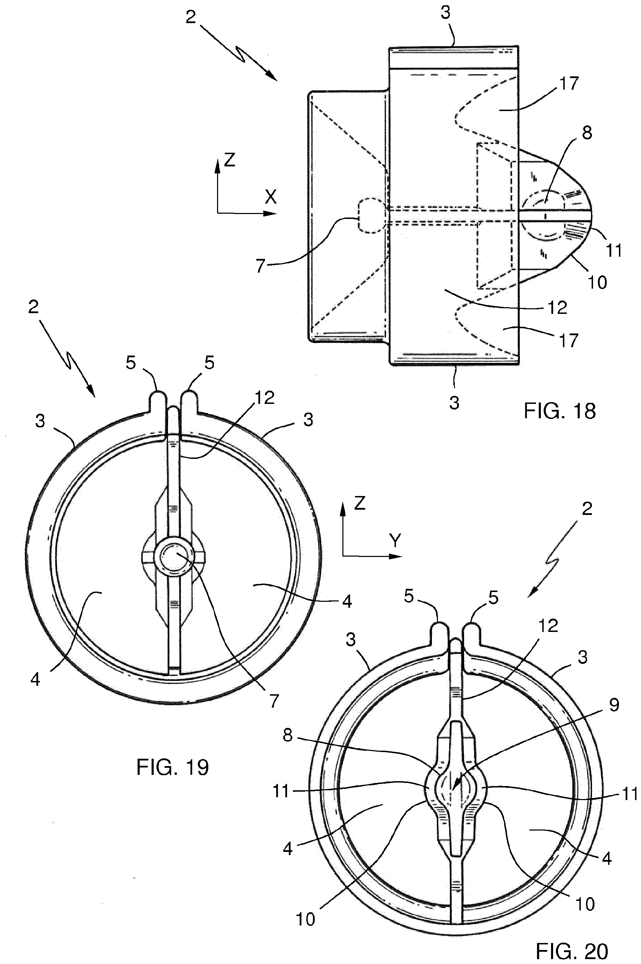

A first difference with respect to the first embodiment consists of the way in which the first abutting means limiting the relative rotation of the clamps 2 about the first axis of rotation Y are made. In this case, as can be seen more clearly in Figures 18, 23 and 24, the central partition 12 of each clamp 2 comprises two notches 17 on either side of the female portion 8, such that the edges of these notches 17 constitute the abutting edges 14B. When the clamp 2 rotates in a relative manner with respect to the contiguous clamp 2 according to the first axis of rotation Y, the lobe 13 of the central partition 12 thereof slides into the corresponding notch 17 of the central partition 12 of the contiguous clamp 2, until the lobe 13 abuts with the corresponding abutting edge 14B. The two abutment positions in the two opposite directions of rotation are shown, respectively, in Figures 23 and 24. On the other hand, as a result of these notches 17, the lobes 13 do not limit the relative rotation of the clamp 2 in a relative manner with respect to the contiguous clamp 2 according to the second axis of rotation Z, as shown in Figures 21 and 22.

A second difference with respect to the first embodiment, which is independent of the first difference described above, consists of the shape the arms 3 of the clamps 2 adopt so that the two ducts formed by the succession of said clamps are closed ducts. In each pair of contiguous clamps 2 attached to one another by the ball-and-socket joint 6, the arm 3 of a clamp 2 is fitted into the arm 3 of the contiguous clamp 2 to which it is attached, i.e., an end of one arm 3 is inserted into an end of the other arm 3. The two ducts for cables formed by the succession of the duct segments 4 of the clamps 2 are continuous ducts closed by the arms 3. In order to allow relative rotation of one clamp 2 with respect to the other about the ball-and-socket joint 6, in the area in which the two corresponding arms 3 of the contiguous clamps 2 are fitted into one another, the external dimension of the inner arm 3 is smaller than the internal dimension of the outer arm 3.

## Claims

1. An articulated guide (1) for cables, formed by a plurality of clamps (2) that are successively attached to one another in an articulated manner, each of said clamps (2) comprising at least one arm (3) demarcating a duct segment (4) for cables, such that the succession of said duct segments (4) of the clamps (2) forms a duct for cables along said articulated guide (1), and in which said arm (3) of each clamp (2) has a free end (5) and is elastically flexible, such that the bending of said arm (3) laterally opens said duct segment (4) for inserting a cable laterally therein, wherein said clamps (2) are successively attached to one another by means of a ball-and-socket joint (6), such that each clamp (2) can rotate in a relative manner with respect to the contiguous clamp (2) to which it is attached about said ball-and-socket joint (6) according to at least two axes of rotation (Y, Z) perpendicular to one another and perpendicular to an axial direction (X) of the articulated guide (1), each of said clamps (2) comprising, respectively, at a first end and at a second end of said clamp (2) arranged opposite one another according to said axial direction (X), a spherical ball male portion (7) and a spherical socket female portion (8), configured such that the male portion (7) of a clamp (2) is inserted into the female portion (8) of the contiguous clamp (2) to form said spherical ball-and-socket joint (6), and in that said female portion (8) of each clamp (2) comprises an opening (9) which is oriented in said axial direction (X) and opens into said female portion (8), said opening (9) being elastically deformable by the pushing of said male portion (7) towards said female portion (8) in said axial direction (X) for snap-fitting said male portion (7) into said female portion (8);
wherein each clamp (2) comprises a central partition (12) and two of said arms (3) extending on opposite sides of said central partition (12), said two arms (3) demarcating with said central partition (12) two duct segments (4) separated by said central partition (12), said male portion (7) and said female portion (8) being formed in said central partition (12), at opposite ends thereof along said axial direction (X), wherein each clamp (2) can rotate in a relative manner with respect to the contiguous clamp (2) to which it is attached about said ball-and-socket joint (6) according to at least a first axis of rotation (Y) perpendicular to said central partition (12) and to said axial direction (X) and a second axis of rotation (Z) perpendicular to said first axis of rotation (Y) and to said axial direction (X);
**characterized in that** said central partition (12) of each clamp (2) comprises first abutting means for limiting the rotation of said clamp (2) according to said first axis of rotation (Y) perpendicular to said central partition (12), said first abutting means consisting of two lobes (13) formed in said central partition (12) on either side of said male portion (7) and extending in said axial direction (X) on the same plane as said central partition (12), and two abutting edges (14A, 14B) formed in said central partition (12) on either side of said female portion (8) and having a shape complementary to the shape of said lobes (13), such that when said clamp (2) rotates a specific angle according to said first axis of rotation (Y), one of said lobes (13) of the central partition (12) of said clamp (2) abuts with one of said abutting edges (14A, 1AB) of the central partition (12) of the contiguous clamp (2) to which it is attached.

2. The articulated guide (1) for cables according to claim 1, **characterized in that** said opening (9) is formed by two lips (10) facing one another and extending from said female portion (8) in said axial direction (X) and having a cantilever free end (11), said lips (10) progressively separating from one another in the direction away from said female portion (8) and forming between them at their free end (11) a seat to receive said male portion (7) of the contiguous clamp (2) before said snap-fitting.

3. The articulated guide (1) for cables according to claim 1, **characterized in that** said central partition (12) comprises two recessed areas (15) formed in said central partition (12) on either side of said female portion (8) and on opposite sides of said central partition (12) with respect to the central plane thereof, such that the lobe (13) of the contiguous clamp (2) slides on said corresponding recessed area (15) when said clamp (2) rotates according to said first axis of rotation (Y), and said abutting edges (14A) consist of the step formed by each recessed area (15) in said central partition (12), and **in that** in said recessed area (15) the wall of said central partition (12) has a curvature (16) that moves the free end of said recessed area (15) away from the central plane of said central partition (12), such that said curvature (16) allows rotation of the clamp (2) according to said second axis of rotation (Z).

4. The articulated guide (1) for cables according to claim 1, **characterized in that** said central partition (12) comprises two notches (17) on either side of said female portion (8), such that the lobe (13) of the contiguous clamp (2) slides into said corresponding notch (17) when said clamp (2) rotates according to said first axis of rotation (Y), and said abutting edges (14B) consist of the edge of said notch (17).

5. The articulated guide (1) for cables according to any one of claims 1 to 4, **characterized in that** in each pair of contiguous clamps (2) attached to one another by said ball-and-socket joint (6), the corresponding arms (3) of said clamps (2) are separated from one another by a gap (18), such that the duct for cables formed by the succession of said duct segments (4) of the clamps (2) is a discontinuous duct that is open at said gaps (18) between the arms (3).

6. The articulated guide (1) for cables according to any one of claims 1 to 4, **characterized in that** in each pair of contiguous clamps (2) attached to one another by said ball-and-socket joint (6), the arm (3) of a clamp (2) is fitted into the arm (3) of the contiguous clamp (2) to which it is attached, such that the duct for cables formed by the succession of said duct segments (4) of the clamps (2) is a continuous duct that is closed by said arms (3), and **in that** in the area in which the two arms (3) are fitted into one another, the external dimension of the inner arm (3) is smaller than the internal dimension of the outer arm (3) to allow relative rotation of one clamp (2) with respect to the other about said ball-and-socket joint (6).

7. The articulated guide (1) for cables according to any one of claims 1 to 6, **characterized in that** each of said clamps (2) is a single part molded from polymeric material.

## Patentansprüche

1. Eine gelenkige Führung (1) für Kabel, gebildet aus einer Vielzahl von Klemmen (2), die aufeinanderfolgend gelenkig aneinander befestigt sind, wobei jede der vorgenannten Klemmen (2) mindestens einen Arm (3) aufweist, der ein Kanalsegment (4) für Kabel abgrenzt, sodass die Aufeinanderfolge der vorgenannten Kanalsegmente (4) der Klemmen (2) einen Kanal für Kabel entlang der vorgenannten gelenkigen Führung (1) formt, und wobei der vorgenannte Arm (3) jeder Klemme (2) ein freies Ende (5) hat und elastisch biegsam ist, sodass die Biegung des vorgenannten Arms (3) das vorgenannte Kanalsegment (4) seitlich für ein seitliches Einführen eines Kabels darin öffnet, wobei die vorgenannten Klemmen (2) mittels eines Kugelgelenks (6) aufeinanderfolgend aneinander befestigt sind, sodass jede Klemme (2) sich relativ zu der angrenzenden Klemme (2), an der sie über das vorgenannte Kugelgelenk (6) befestigt ist, bezüglich mindestens zwei Drehachsen (Y, Z), die senkrecht zueinander und senkrecht zu einer axialen Richtung (X) der gelenkigen Führung (1) sind, drehen kann, wobei jede der vorgenannten Klemmen (2) an einem ersten Ende und an einem zweiten Ende der vorgenannten Klemme (2), die einander in vorgenannter axialer Richtung (X) gegenüberliegend angeordneter sind, jeweils einen männlichen Kugelkopfabschnitt (7) und einen weiblichen Kugelschalenabschnitt (8) aufweist, die so konfiguriert sind, dass der männliche Abschnitt (7) einer Klemme (2) in den weiblichen Abschnitt (8) der angrenzenden Klemme (2) eingeführt ist, um das vorgenannte Kugelgelenk (6) zu formen, und dass der vorgenannte weibliche Abschnitt (8) jeder Klemme (2) eine Öffnung (9) aufweist, die in der vorgenannten axialen Richtung (X) ausgerichtet ist und sich in den vorgenannten weiblichen Abschnitt (8) öffnet, wobei die vorgenannte Öffnung (9) durch das Drücken des vorgenannten männlichen Abschnitts (7) in Richtung des vorgenannten weiblichen Abschnitts (8) in der vorgenannten axialen Richtung (X) elastisch verformbar ist, um den vorgenannten männlichen Abschnitt (7) in den vorgenannten weiblichen Abschnitt (8) einschnappen zu lassen;
wobei jede Klemme (2) eine zentrale Trennwand (12) aufweist und zwei der vorgenannten Arme (3) sich auf gegenüberliegenden Seiten der vorgenannten zentralen Trennwand (12) erstrecken, wobei die beiden vorgenannten Arme (3) mit der vorgenannten zentralen Trennwand (12) zwei Kanalsegmente (4) abgrenzen, die durch die vorgenannte zentrale Trennwand (12) getrennt werden, wobei der vorgenannte männliche Abschnitt (7) und der vorgenannte weibliche Abschnitt (8) in der vorgenannten zentralen Trennwand (12) an gegenüberliegenden Enden entlang der vorgenannten axialen Richtung (X) geformt sind, wobei sich jede Klemme (2) relativ zu der angrenzenden Klemme (2), an der sie über das vorgenannte Kugelgelenk (6) befestigt ist, bezüglich mindestens einer ersten Drehachse (Y), die senkrecht zur vorgenannten zentralen Trennwand (12) und zur vorgenannten axialen Richtung (X) ist, und einer zweiten Drehachse (Z), die senkrecht zu der vorgenannten ersten Drehachse (Y) und zur vorgenannten axialen Richtung (X) ist, drehen kann;
**dadurch gekennzeichnet, dass** die vorgenannte zentrale Trennwand (12) jeder Klemme (2) ein erstes Anschlagmittel zur Begrenzung der Drehung der vorgenannten Klemme (2) bezüglich der vorgenannten ersten Drehachse (Y) senkrecht zu der vorgenannten zentralen Trennwand (12) umfasst, wobei das vorgenannte erste Anschlagmittel aus zwei Lappen (13) besteht, die in der vorgenannten zentralen Trennwand (12) auf beiden Seiten des vorgenannten männlichen Abschnitts (7) geformt sind und sich in der vorgenannten axialen Richtung (X) auf derselben Ebene wie die zentrale Trennwand (12) erstrecken, und aus zwei Stoßkanten (14A, 14B), die in der vorgenannten zentralen Trennwand (12) auf beiden Seiten des vorgenannten weiblichen Abschnitts (7) geformt sind und eine zu der Form der vorgenannten Lappen (13) komplementäre Form haben, sodass, wenn die vorgenannte Klemme (2) um einen bestimmten Winkel bezüglich der vorgenannten ersten Drehachse (Y) gedreht wird, einer der vorgenannten Lappen (13) der zentralen Trennwand (12) der vorgenannten Klemme (2) an eine der vorgenannten Stoßkanten (14A, 14B) der zentralen Trennwand (12) der angrenzenden Klemme (2), an der sie befestigt ist, anstößt.

2. Die gelenkige Führung (1) für Kabel nach Anspruch 1, **dadurch gekennzeichnet, dass** die vorgenannte Öffnung (9) durch zwei Lippen (10) geformt wird, die einander gegenüberliegen und sich von dem vorgenannten weiblichen Abschnitt (8) in der vorgenannten axialen Richtung (X) erstrecken und ein freitragendes freies Ende (11) haben, wobei sich die vorgenannten Lippen (10) in der Richtung weg von dem vorgenannten weiblichen Abschnitt (8) fortschreitend voneinandertrennen und zwischen sich an ihrem freien Ende (11) einen Sitz bilden, um den vorgenannten männlichen Abschnitt (7) der angrenzenden Klemme (2) vordem vorgenannten Einschnappen aufzunehmen.

3. Die gelenkige Führung (1) für Kabel nach Anspruch 1, **dadurch gekennzeichnet, dass** die vorgenannte zentrale Trennwand (12) zwei vertiefte Bereiche (15) umfasst, die in der vorgenannten zentralen Trennwand (12) auf beiden Seiten des vorgenannten weiblichen Abschnitts (8) und auf gegenüberliegenden Seiten der vorgenannten zentralen Trennwand (12) in Bezug auf deren Mittelebene ausgebildet sind, sodass der Lappen (13) der angrenzenden Klemme (2) auf dem vorgenannten entsprechenden vertieften Bereich (15) gleitet, wenn sich die vorgenannte Klemme (2) bezüglich der vorgenannten ersten Drehachse (Y) dreht und die vorgenannten Stoßkanten (14A) aus der von jedem vertieften Bereich (15) in der zentralen Trennwand (12) geformten Stufe bestehen, und dass in dem vorgenannten vertieften Bereich (15) die Wand der vorgenannten zentralen Trennwand (12) eine Krümmung (16) hat, die das freie Ende des vorgenannten vertieften Bereichs (15) von der Mittelebene der vorgenannten zentralen Trennwand (12) wegbewegt, sodass die vorgenannte Krümmung (16) eine Drehung der Klemme (2) bezüglich der vorgenannten zweiten Rotationsachse (Z) erlaubt.

4. Die gelenkige Führung (1) für Kabel nach Anspruch 1, **dadurch gekennzeichnet, dass** die vorgenannte zentrale Trennwand (12) zwei Kerben (17) auf beiden Seiten des vorgenannten weiblichen Abschnitts (8) umfasst, sodass der Lappen (13) der angrenzenden Klemme (2) in die vorgenannte entsprechende Kerbe (17) gleitet, wenn sich die vorgenannte Klemme (2) bezüglich der vorgenannten ersten Drehachse (Y) dreht, und die vorgenannten Stoßkanten (14B) aus der Kante der vorgenannten Kerbe (17) bestehen.

5. Die gelenkige Führung (1) für Kabel nach einem der Ansprüche 1 bis 4, **dadurch gekennzeichnet, dass** in jedem Paar von aneinander angrenzenden Klemmen (2), die durch das vorgenannte Kugelgelenk (6) aneinander befestigt sind, die entsprechenden Arme (3) der vorgenannten Klemmen (2) durch einen Spalt (18) voneinander getrennt sind, sodass der Kanal für Kabel, der durch die Aufeinanderfolge der vorgenannten Kanalsegmente (4) der Klemmen (2) gebildet wird, ein diskontinuierlicher Kanal ist, der an den vorgenannten Spalten (18) zwischen den Armen (3) offen ist.

6. Die gelenkige Führung (1) für Kabel nach einem der Ansprüche 1 bis 4, **dadurch gekennzeichnet, dass** in jedem Paar von aneinander angrenzenden Klemmen (2), die durch das vorgenannte Kugelgelenk (6) aneinander befestigt sind, der Arm (3) einer Klemme (2) in den Arm (3) der angrenzenden Klemme (2), an dem sie befestigt ist, eingepasst ist, derart, dass der durch die Aufeinanderfolge der vorgenannten Kanalsegmente (4) der Klemmen (2) gebildete Kanal für Kabel ein kontinuierlicher Kanal ist, der durch die vorgenannten Arme (3) verschlossen ist, und dass in dem Bereich, in dem die beiden Arme (3) ineinander eingepasst sind, die Außenabmessung des inneren Arms (3) kleiner als die Innenabmessung des äußeren Arms (3) ist, um eine relative Drehung einer Klemme (2) in Bezug auf die andere um das vorgenannte Kugelgelenk (6) zu ermöglichen.

7. Die gelenkige Führung (1) für Kabel nach einem der Ansprüche 1 bis 6, **dadurch gekennzeichnet, dass** jede der vorgenannten Klemmen (2) ein aus Polymermaterial geformtes Einzelteil ist.

## Revendications

1. Guide articulé (1) pour des câbles, formé par une pluralité de serre-câbles (2) qui sont successivement attachés les uns aux autres de manière articulée, chacun desdits serre-câbles (2) comprenant au moins un bras (3) démarquant un segment de conduit (4) pour des câbles, de sorte que la succession desdits segments de conduit (4) des serre-câbles (2) forme un conduit pour des câbles le long dudit guide articulé (1), et dans lequel ledit bras (3) de chaque serre-câble (2) a une extrémité libre (5) et est élastiquement flexible, de sorte que la flexion dudit bras (3) ouvre latéralement ledit segment de conduit (4) pour l'insertion d'un câble latéralement en son sein, dans lequel lesdits serre-câbles (2) sont successivement attachés les uns aux autres au moyen d'un joint à rotule (6), de sorte que chaque serre-câble (2) puisse tourner de manière relative vis-à-vis du serre-câble (2) contigu auquel il est attaché autour dudit joint à rotule (6) selon au moins deux axes de rotation (Y, Z) perpendiculaires l'un à l'autre et perpendiculaires à une direction axiale (X) du guide articulé (1), chacun desdits serre-câbles (2) comprenant, respectivement, à une première extrémité et à une seconde extrémité dudit serre-câble (2) agencées opposées l'une à l'autre selon ladite direction axiale (X), une portion mâle de bille sphérique (7) et une portion femelle d'embout sphérique (8), configurées de sorte que la portion mâle (7) d'un serre-câble (2) soit insérée dans la portion femelle (8) du serre-câble (2) contigu pour former ledit joint à rotule (6) sphérique, et en ce que ladite portion femelle (8) de chaque serre-câble (2) comprend une ouverture (9) qui est orientée dans ladite direction axiale (X) et s'ouvre sur ladite portion femelle (8), ladite ouverture (9) étant élastiquement déformable par la poussée de ladite portion mâle (7) vers ladite portion femelle (8) dans ladite direction axiale (X) pour un emboîtement à pression de ladite portion mâle (7) dans ladite portion femelle (8) ;
dans lequel chaque serre-câble (2) comprend une séparation centrale (12) et deux desdits bras (3) s'étendant sur des côtés opposés de ladite séparation centrale (12), lesdits deux bras (3) démarquant avec ladite séparation centrale (12) deux segments de conduit (4) séparés par ladite séparation centrale (12), ladite portion mâle (7) et ladite portion femelle (8) étant formées dans ladite séparation centrale (12), à ses extrémités opposées le long de ladite direction axiale (X), dans lequel chaque serre-câble (2) peut tourner de manière relative vis-à-vis du serre-câble (2) contigu auquel il est attaché autour dudit joint à rotule (6) selon au moins un premier axe de rotation (Y) perpendiculaire à ladite séparation centrale (12) et à ladite direction axiale (X) et un second axe de rotation (Z) perpendiculaire audit premier axe de rotation (Y) et à ladite direction axiale (X) ;
**caractérisé en ce que** ladite séparation centrale (12) de chaque serre-câble (2) comprend des premiers moyens de butée pour limiter la rotation dudit serre-câble (2) selon ledit premier axe de rotation (Y) perpendiculaire à ladite séparation centrale (12), lesdits premiers moyens de butée consistant en deux lobes (13) formés dans ladite séparation centrale (12) sur chaque côté de ladite portion mâle (7) et s'étendant dans ladite direction axiale (X) sur le même plan que ladite séparation centrale (12), et deux bords de butée (14A, 14B) formés dans ladite séparation centrale (12) sur chaque côté de ladite portion femelle (8) et ayant une forme complémentaire à la forme desdits lobes (13), de sorte que lorsque ledit serre-câble (2) tourne sur un angle spécifique selon ledit premier axe de rotation (Y), l'un desdits lobes (13) de la séparation centrale (12) dudit serre-câble (2) bute avec l'un desdits bords de butée (14A, 1AB) de la séparation centrale (12) du serre-câble (2) contigu auquel il est attaché.

2. Guide articulé (1) pour des câbles selon la revendication 1, **caractérisé en ce que** ladite ouverture (9) est formée par deux lèvres (10) face à face et s'étendant depuis ladite portion femelle (8) dans ladite direction axiale (X) et ayant une extrémité libre en porte-à-faux (11), lesdites lèvres (10) se séparant progressivement l'une de l'autre dans la direction en éloignement de ladite portion femelle (8) et formant entre elles à leur extrémité libre (11) un siège pour recevoir ladite portion mâle (7) du serre-câble (2) contigu avant ledit emboîtement à pression.

3. Guide articulé (1) pour des câbles selon la revendication 1, **caractérisé en ce que** ladite séparation centrale (12) comprend deux zones en retrait (15) formées dans ladite séparation centrale (12) sur chaque côté de ladite portion femelle (8) et sur des côtés opposés de ladite séparation centrale (12) vis-à-vis de son plan central, de sorte que le lobe (13) du serre-câble (2) contigu glisse sur ladite zone en retrait (15) correspondante lorsque ledit serre-câble (2) tourne selon ledit premier axe de rotation (Y), et lesdits bords de butée (14A) consistent en le palier formé par chaque zone en retrait (15) dans ladite séparation centrale (12), et **en ce que** dans ladite zone en retrait (15) la paroi de ladite séparation centrale (12) a une courbure (16) qui éloigne l'extrémité libre de ladite zone en retrait (15) du plan central de ladite séparation centrale (12), de sorte que ladite courbure (16) permette une rotation du serre-câble (2) selon ledit second axe de rotation (Z).

4. Guide articulé (1) pour des câbles selon la revendication 1, **caractérisé en ce que** ladite séparation centrale (12) comprend deux encoches (17) sur chaque côté de ladite portion femelle (8), de sorte que le lobe (13) du serre-câble (2) contigu glisse dans ladite encoche (17) correspondante lorsque ledit serre-câble (2) tourne selon ledit premier axe de rotation (Y), et lesdits bords de butée (14B) consistent en le bord de ladite encoche (17).

5. Guide articulé (1) pour des câbles selon l'une quelconque des revendications 1 à 4, **caractérisé en ce que** dans chaque paire de serre-câbles (2) contigus attachés l'un à l'autre par ledit joint à rotule (6), les bras (3) correspondants desdits serre-câbles (2) sont séparés l'un de l'autre par un écartement (18), de sorte que le conduit pour des câbles formé par la succession desdits segments de conduit (4) des serre-câbles (2) est un conduit discontinu qui est ouvert au niveau desdits écartements (18) entre les bras (3).

6. Guide articulé (1) pour des câbles selon l'une quelconque des revendications 1 à 4, **caractérisé en ce que** dans chaque paire de serre-câbles (2) contigus attachés l'un à l'autre par ledit joint à rotule (6), le bras (3) d'un serre-câble (2) est adapté dans le bras (3) du serre-câble (2) contigu auquel il est attaché, de sorte que le conduit pour des câbles formé par la succession desdits segments de conduit (4) des serre-câbles (2) est un conduit continu qui est fermé par lesdits bras (3), et **en ce que** dans la zone dans laquelle les deux bras (3) sont adaptés l'un dans l'autre, la dimension externe du bras (3) interne est plus petite que la dimension interne du bras (3) externe pour permettre une rotation relative d'un serre-câble (2) vis-à-vis de l'autre autour dudit joint à rotule (6).

7. Guide articulé (1) pour des câbles selon l'une quelconque des revendications 1 à 6, **caractérisé en ce que** chacun desdits serre-câbles (2) est une pièce unique moulée à partir d'un matériau polymérique.
